# EUROPÄISCHE PATENTSCHRIFT

(11) **EP 3 553 488 B1**
(45) Veröffentlichungstag und Bekanntmachung des Hinweises auf die Patenterteilung: **24.03.2021**
(21) Anmeldenummer: 19168709.4
(22) Anmeldetag: 11.04.2019
(51) Int. Cl.: G01M 3/20, G01N 21/64, G01N 21/78

(54) **VERFAHREN UND VORRICHTUNG ZUR DETEKTION VON GASLECKS**
METHOD AND DEVICE FOR DETECTING GAS LEAKS
PROCÉDÉ ET DISPOSITIF DE DÉTECTION DE FUITES DE GAZ

(30) Priorität: 12.04.2018 AT 503162018
(43) Veröffentlichungstag der Anmeldung: 16.10.2019
(73) Patentinhaber: Joanneum Research Forschungsgesellschaft mbH, 8010 Graz (AT)
(72) Erfinder: Wolf, Christian, 8041 Graz (AT); Suppan, Michael, 8010 Graz (AT)
(74) Vertreter: Dilg, Haeusler, Schindelmann Patentanwaltsgesellschaft mbH

(56) Entgegenhaltungen:
- EP-A1- 3 184 994
- WO-A1-99/10721
- WO-A1-2008/068452
- DE-A1- 2 717 436
- DE-A1- 10 123 079
- DE-A1-102015 219 250
- DE-B3-102015 001 443
- DE-C- 819 730
- US-A- 5 347 845

## Beschreibung

### Technisches Gebiet

Die Erfindung betrifft ein Verfahren und eine zugehörige Vorrichtung zum Detektieren von Gaslecks.

### Hintergrund der Erfindung

Es gibt zahlreiche Sensoren zur Detektion von Gaslecks an Oberflächen. Dazu gehören beispielsweise Metalloxidsensoren, deren Funktionsprinzip auf einer Änderung der Leitfähigkeit bestimmter Metalloxide in Anwesenheit von oxidierbaren Gasen beruht. Solche Metalloxidsensoren sind weitgehend auf die Detektion von brennbaren Gasen beschränkt. Ultraschallsensoren reagieren nicht auf das ausströmende Gas selbst, sondern auf Geräusche, die von Gaslecks vor allem im Ultraschallbereich erzeugt werden. Derartige Sensoren erweisen sich als relativ fehleranfällig für Störungen durch andere Schallquellen. Infrarotsensoren nutzen die unterschiedlichen Absorptionseigenschaften von Gasen im Bereich infraroter Strahlung. Diese Methode ist aufwändig, zudem sind lange Detektionsstrecken erforderlich, was einer Miniaturisierung der Sensoren sowie der Detektion lokaler, kleiner Leckstellen entgegensteht. Bei einer weiteren Detektionsmethode wird der Gasleitung ein Tracergas beigesetzt, welches mit speziellen Detektoren einfach zu erkennen ist. Dieser Ansatz erfordert einen Eingriff in die zu untersuchende Anlage, der meist sehr aufwändig ist. Es gibt zahlreiche weitere Methoden, ausströmende Gase zum Beispiel über elektrochemische, optische oder chromatographische Methoden zu detektieren. Auch diese weiteren Methoden sind meist sehr selektiv, das heißt sie sind nur für den Nachweis einiger weniger Gase geeignet.

Die Patentschrift WO 2008/068452 A1 beschreibt einen Leckdetektor, der dazu eingerichtet ist, ein Leck eines ersten Materials indirekt zu detektieren, indem eine Änderung in einer physikalischen und/oder chemischen Eigenschaft eines zweiten Materials gemessen wird. Die physikalische Eigenschaft kann eine Konzentration des zweiten Materials und/oder ein Druck des zweiten Materials sein oder eine Eigenschaft, die von Konzentration oder Druck abhängt, beispielsweise eine IR-Absorption oder eine Veränderung des IR-Spektrums. Zum Beispiel kann der Leckdetektor ein Leck des ersten Materials über eine Konzentrationsänderung des zweiten Materials erkennen. Dabei entsteht die Konzentrationsänderung des zweiten Materials dadurch, dass das zweite Material durch das erste Material verdrängt wird.

Die Patentschrift DE 10 2015 219250 A1 offenbart ein Verfahren zum Detektieren eines Lecks in einem druckbeaufschlagten Prüfling, welcher ein sauerstofffreies Prüfgas mit einem CO2-Anteil enthält. Dazu werden in einem von einer Schnüffelsonde eines Leckdetektors angesaugten Gasstrom durch einen Partialdrucksensor Schwankungen des CO2-Anteils in dem Gasstrom erfasst. Weiterhin wird durch einen Sauerstoffsensor des Leckdetektors der Sauerstoffanteil im Gasstrom gemessen, um denjenigen Gasstrom zu erfassen, der nicht aus einem Leck des Prüflings stammt, sondern aus einer Verbrennung von Sauerstoff resultiert. Auf diese Weise kann ein CO2-Anteil identifiziert werden, der nicht aus einem Leck des Prüflings sondern beispielsweise aus dem Atemgas einer Bedienperson entstammt.

Die Patentschrift DE 27 17 436 A1 beschreibt ein Verfahren zur Bestimmung des Partialdrucks eines Gases unter anderem zur Vakuummessung und Leckanzeige. Auf das Vorhandensein eines Lecks wird aus dem relativen Partialdruck eines Gases geschlossen. Zum Beispiel zeichnet sich ein geschlossenes Vakuumsystem, das frei von Lecks ist, typischerweise durch eine stabile, kleine Stickstoffkonzentration aus, die vom Ausgasen der Vakuumkammerwände stammt. Merkliche Lecks anderer Gase als Stickstoff haben den Effekt, die relative Konzentration an Stickstoff gegenüber dem erwarteten Wert zu reduzieren und können dementsprechend über eine Stickstoffmessung indirekt detektiert werden.

Die Patentschrift EP 3 184 994 A1 beschreibt eine optische Sensorschicht, um chemische Stoffe zu detektieren, beispielsweise Sauerstoff oder Kohlendioxid. Eine solche Sensorschicht weist ein Substrat auf, beispielsweise aus Metall, Plastik, Glass oder Keramik, eine mesoporöse Matrix, die auf dem Substrat angeordnet ist, sowie eine mikroporöse Matrix, die in der mesoporösen Matrix angeordnet ist. Die mikroporöse Matrix weist einen Indikator-Farbstoff auf, der seine optischen Eigenschaften, beispielsweise seine Lumineszenz, bei Anwesenheit eines zu detektierenden chemischen Stoffs ändert. Die genannten optischen Eigenschaften werden typischerweise mittels eines optischen Sensorsystems gemessen. Ein solches System weist die beschriebene Sensorschicht auf, eine Lichtquelle, um den Indikator-Farbstoff anzuregen, sowie einen Lichtdetektor, der das von der Sensorschicht reflektierte oder emittierte Licht empfängt.

Die Patentschrift DE 10 2015 001443 B3 offenbart ein Gasspürgerät in Form eines Handgeräts. Der Sensor des Geräts kann aufgrund eines kapazitiven, potentiometrischen, amperometrischen, thermischen, gravimetrischen, optischen oder biochemischen Messprinzips arbeiten.

Die Patentschrift WO 99/10721 A1 offenbart ein Verfahren zum Lecktesten eines Heizkörpers. Dafür wird der Heizkörper mit einem zu detektierenden Testgas druckbefüllt. Der Heizkörper, insbesondere Schweißnähte desselben, wird dann mittels einer Vielzahl von Sonden abgefahren, um etwaige Lecks zu detektieren.

Die Patentschrift US 5 347 845 A offenbart ein System zur Entnahme von Luftproben aus einem Transportbehälter. Die Patentschrift DE 819 730 C beschreibt grundlegende Prinzipien eines Verfahrens zur Lecksuche basierend auf Lumineszenzeffekten. Die Patentschrift DE 101 23 079 A1 beschreibt schließlich eine Vorrichtung zur Messung der Sauerstoffkonzentration in einem Gasstrom, insbesondere in einem durch einen Kanal geleiteten Atemgasstrom eines Patienten. Dafür wird ein Sensor verwendet, der sich Lumineszenzeffekte zunutze macht.

Die Patentschrift WO 2013/142886 A1 beschreibt einen opto-chemischen Sensor, der die Konzentration eines Gases über das Lumineszenzverhalten einer im Sensor enthaltenen Substanz bestimmt. Eine Sensorschicht auf einem Träger wird dabei aus gesponnenen Nanofasern gebildet, welche mit einem Lumineszenzfarbstoff dotiert sind. Vor allem dank der großen Oberfläche der Nanofasern zeichnet sich ein solcher opto-chemischer Sensor durch ein schnelles Ansprechverhalten und gute Empfindlichkeit aus.

Mit Blick auf die derzeit verfügbaren Sensoren liegt der Erfindung die Aufgabe zugrunde, ein Verfahren und eine zugehörige Vorrichtung zur Detektion von Gaslecks zu entwickeln, wobei das Verfahren und die Vorrichtung mindestens einen, vorzugsweise alle, der folgenden Aspekte erfüllen mag: (i) besonders vielseitig zu sein, also Lecks einer Vielzahl von unterschiedlichen Gasen bei vergleichbarer Sensibilität detektieren zu können, (ii) besonders schnell zu sein, so dass unter anderem auf dem Verfahren basierende Handschnüffelsonden praktikabel sind, (iii) eine kompakte Baugröße aufzuweisen, was wiederum einen Einsatz in Handschnüffelsonden oder auch in mobilen automatisierten Abtasteinrichtungen erleichtert.

### Zusammenfassung der Erfindung

Diese Aufgabe wird gelöst durch die Gegenstände der unabhängigen Patentansprüche. Vorteilhafte Ausführungsformen der vorliegenden Erfindung sind in den abhängigen Ansprüchen beschrieben.

In einer Ausführungsform weist ein Verfahren zum Detektieren eines Gaslecks Folgendes auf: ein Abtasten (Abfahren, Überstreichen) einer Oberfläche, die ein Volumen mit einem ersten Gas zumindest teilweise begrenzt, mittels einer Vorrichtung, die einen Sensor aufweist, wobei der Sensor ein opto-chemischer Sensor sein kann und Folgendes aufweisen kann: eine Lichtquelle, die konfiguriert ist, ein Anregungslicht bereitzustellen, eine Sensorschicht, die konfiguriert und angeordnet ist, in Antwort auf das Anregungslicht ein Lumineszenzlicht auszustrahlen, und einen Lichtempfänger, der konfiguriert und angeordnet ist, das von der Sensorschicht ausgestrahlte Lumineszenzlicht zu empfangen und in ein Messsignal umzuwandeln; ein Detektieren, mittels des Sensors, einer Änderung einer Konzentration eines zweiten Gases in einem Medium, welches den Sensor umgibt, anhand einer Änderung des Messsignals, die verursacht wird durch eine Änderung von zumindest einem von einer Intensität, einem Spektrum, einer Phasenverschiebung und einer Abklingzeit des empfangenen Lumineszenzlichts in Abhängigkeit von der Änderung der Konzentration des zweiten Gases in dem Medium. Dabei wird die Änderung der Konzentration des zweiten Gases in dem Medium verursacht durch ein Ausströmen des ersten Gases aus dem Gasleck in das Medium und das Abtasten ist ein Abfahren und/oder Überstreichen.

In einer weiteren Ausführungsform weist eine Vorrichtung zum Abtasten einer Oberfläche und Detektieren eines Gaslecks in der Oberfläche, die ein Volumen mit einem ersten Gas zumindest teilweise begrenzt, insbesondere mittels eines der hierin beschriebenen Verfahren, Folgendes auf: einen Sensor zum Detektieren einer Änderung einer Konzentration eines zweiten Gases in einem Medium, welches den Sensor umgibt, wobei der Sensor ein opto-chemischer Sensor sein kann und Folgendes aufweisen kann: eine Lichtquelle, die konfiguriert und angeordnet ist, ein Anregungslicht bereitzustellen, eine Sensorschicht, die konfiguriert und angeordnet ist, in Antwort auf das Anregungslicht ein Lumineszenzlicht auszustrahlen, und einen Lichtempfänger, der konfiguriert und angeordnet ist, das von der Sensorschicht ausgestrahlte Lumineszenzlicht zu empfangen und in ein Messsignal umzuwandeln; und eine Auswerteeinrichtung zum Empfangen und Verarbeiten des Messsignals, wobei die Auswerteeinrichtung konfiguriert ist, die Änderung der Konzentration des zweiten Gases in dem Medium, welches den Sensor umgibt, zu detektieren anhand einer Änderung des Messsignals, die verursacht wird durch eine Änderung von zumindest einem von einer Intensität, einem Spektrum, einer Phasenverschiebung und einer Abklingzeit des empfangenen Lumineszenzlichts in Abhängigkeit von der Änderung der Konzentration des zweiten Gases in dem Medium. Dabei wird die Änderung der Konzentration des zweiten Gases in dem Medium verursacht durch ein Ausströmen des ersten Gases aus dem Gasleck in das Medium und das Abtasten ist ein Abfahren und/oder Überstreichen.

In einer Ausführungsform messen also einer oder mehrere Sensoren eine Konzentrationsänderung eines ersten Gases in einem Medium, wobei die Konzentrationsänderung verursacht wird durch das Ausströmen eines zweiten Gases aus dem Gasleck in das Medium. Eine praktikable Umsetzung dieser Idee wird insbesondere, wenn nicht gar erst möglich durch die Verwendung schneller und kompakter Gassensoren, beispielsweise von Sauerstoffsensoren, wie sie in jüngster Zeit entwickelt wurden.

Ein "Gas" kann hier ein einzelnes Gas sein, das nur aus einer Sorte von Gasmolekülen oder Gasatomen besteht, oder auch ein Gasgemisch. Das Medium ist üblicherweise auch ein Gas, kann aber auch eine Flüssigkeit sein. Die Konzentration eines Gases bezeichnet die Stoffmenge pro Volumen. Das erste Gas kann beispielsweise Erdgas, Stickstoff, Wasserstoff oder Methan sein, das Medium beispielsweise Luft und das zweite Gas beispielsweise Sauerstoff oder Stickstoff.

Im Kontext der vorliegenden Anmeldung kann der Begriff "Lumineszenz" insbesondere die Eigenschaft eines physikalischen Systems bezeichnen, durch eine von außen zugeführte Energie in einen angeregten Zustand versetzt zu werden und in der Folge Licht auszustrahlen. Dieses Licht wird als Lumineszenzlicht bezeichnet. Ein längeres Nachleuchten nach der Anregung nennt man Phosphoreszenz. Tritt das Lumineszenzlicht hingegen nur als Begleiterscheinung der unmittelbaren Anregung auf, spricht man von Fluoreszenz. Der Begriff "Licht" schließt hier jegliche Form elektromagnetischer Strahlung ein, beispielsweise infrarote, ultraviolette oder sichtbare Strahlung. Obwohl eine bevorzugte Ausführungsform der Erfindung Sensoren vorsieht, die auf Lumineszenz beruhen, deckt die erfindungsgemäße Lehre auch Verfahren mit anderen Sensoren ab, solange ein solches Verfahren auf dem weiter unten beschriebenen Prinzip der Gasverdrängung beruht.

Im Kontext der vorliegenden Anmeldung kann der Begriff "opto-chemischer Sensor" insbesondere einen Sensor bedeuten, der sowohl eine optische als auch eine chemische Komponente beinhaltet. Optische Komponenten beruhen auf der Verwendung jeglicher Form elektromagnetischer Strahlung, beispielsweise dem Empfangen, der Erzeugung oder der Veränderung elektromagnetischer Strahlung. Die optische Komponente des Sensors kann insbesondere ein Lumineszenzprozess sein, bei welchem eine Lichtquelle, beispielsweise eine Beleuchtungs-LED, ein Anregungslicht auf eine lumineszierende Substanz strahlt. Das erzeugte Lumineszenzlicht wird dann von einem Lichtempfänger, beispielsweise einer Photo-Diode, empfangen und in ein Messsignal umgewandelt. Chemische Komponenten beruhen auf Prozessen, bei denen Stoffe umgewandelt werden, insbesondere im Rahmen von chemischen Reaktionen. Chemische Reaktionen können in Bezug auf den erfindungsgemäßen Sensor zum Beispiel bei der Herstellung der lumineszierenden Sensorschicht auftreten oder auch bei dem Wechselwirken des zu detektierenden Gases mit der Sensorschicht. Opto-chemische Sensoren zeichnen sich im Rahmen einer Ausführungsform der Erfindung dadurch aus, dass sie sich sehr einfach gegen Umgebungsluft kalibrieren lassen und dass sie einen geringen Wartungsaufwand erfordern, wenn nicht sogar wartungsfrei sind.

Ein "Gasleck" ist ein Riss, ein Spalt oder jede Form einer Öffnung in einer Oberfläche, durch welche ein Gas austreten kann. Ein Gasleck setzt nicht unbedingt eine durch die Oberfläche durchgehende Öffnung voraus, sondern kann auch nur durch eine Veränderung in der Oberfläche bedingt sein, welche die Durchlässigkeit der Oberfläche für ein Gas erhöht. Ein Leck kann sowohl ein Einströmen als auch ein Ausströmen eines Gases nach sich ziehen.

Gaslecks können an beliebigen Formen von "Oberflächen" auftreten, welche ein Volumen zumindest teilweise begrenzen, das von einem Gas eingenommen wird. Solche Oberflächen können geschlossen oder offen sein. Sie können Gasleitungen oder Rohrleitungen beispielsweise von Gasthermen oder Klimaanlagen sein, wobei der Querschnitt einer Gasleitung eine beliebige Form aufweisen kann, beispielsweise einen Kreis, ein Oval, ein Rechteck oder ein Vieleck. Erfindungsgemäße Oberflächen können auch einen Kanister, eine Kartusche oder einen Gastank begrenzen. Es ist zudem vorstellbar, dass die Oberfläche ein Teiler ist, der einen Bereich eines Volumens von einem anderen abteilt. Die Oberfläche kann einen Teil einer größeren Oberfläche bilden, welche ein Volumen mit einem Gas begrenzt.

Schließlich bedeutet im Kontext der vorliegenden Anmeldung das "Abtasten" der Oberfläche durch den Detektor nicht, dass ein direkter Kontakt oder ein Berühren der Oberfläche durch den Detektor erforderlich ist, obwohl ein direkter Kontakt natürlich möglich ist. Andererseits sollte der Abstand zwischen Sensor und Oberfläche nicht zu groß sein, um auch kleine Lecks detektieren zu können.

Die Aufgabe, einen vielseitigen, schnellen und kompakten Detektor und ein entsprechendes Verfahren zu entwickeln, wird durch die vorliegende Erfindung insbesondere folgendermaßen gelöst. Ein *vielseitiges* Verfahren wird durch das grundlegende Prinzip ermöglicht, Gaslecks über Konzentrationsänderungen von Komponenten eines Mediums bestimmen zu können. Dies erlaubt das Detektieren einer Vielzahl unterschiedlicher Gaslecks, insbesondere lässt sich das Ausströmen einer Vielzahl unterschiedlicher Gase detektieren. Es ändert sich schließlich fast immer die Konzentration zumindest einer Komponente des Mediums infolge des Ausströmens eines Gases durch das Leck. Die einzige Ausnahme besteht in dem Fall, dass das ausströmende Gas identisch mit dem Medium ist. Die daraus resultierende Druckluft ist durch einen Detektor der vorgeschlagenen Art typischerweise nicht zu messen. Wenn zuvor festgelegt ist, welche Komponente des Mediums detektiert werden soll, kann der Detektor nur solche Gaslecks erkennen, bei welchen das ausströmende Gas eine andere Konzentration für die betreffende Komponente aufweist als das Medium.

In jüngerer Zeit hat sich gezeigt, dass bestimmte Sensoren auf Basis von Lumineszenz, wie sie in einer Ausführungsform vorgesehen sind, im Vergleich mit anderen Sensoren eine hohe Empfindlichkeit, Sensitivität oder Signal-Rausch Verhältnis und eine *schnelle Ansprechzeit* oder Reaktionszeit aufweisen. Deswegen kann ein erfindungsgemäßer Sensor praktisch instantan ein Messsignal senden, ob ein Leck vorliegt oder nicht. Sensoren auf Basis von Lumineszenz lassen sich darüber hinaus auch besonders *kompakt* anordnen. Erst durch diese Entwicklungen wird eine Verwendung zur Leckdetektion zum Beispiel in handhaltbaren Vorrichtungen praktikabel.

Damit kann die erfindungsgemäße Lehre eine vielseitige, schnelle und kompakte Vorrichtung zur Detektion von Gaslecks und ein entsprechendes Verfahren ermöglichen und die anfangs gestellte Aufgabe lösen.

Gemäß einer Ausführungsform der Erfindung wird ein Verfahren beschrieben, wobei das Medium Luft ist, das zweite Gas eine Komponente von Luft ist und die Änderung der Konzentration des zweiten Gases verursacht wird durch eine Verdrängung des zweiten Gases, welche verursacht wird durch ein Ausströmen des ersten Gases durch das Gasleck.

Eine "Komponente" eines Mediums bzw. eines Gases ist hier als ein Bestandteil des Mediums bzw. Gases zu verstehen. Eine Komponente kann selber aus mehreren (Unter-)Komponenten bestehen und eine Komponente kann insbesondere das Medium bzw. Gas selber sein.

Unter "Luft" werden die verschiedenen Formen und Ausprägungen des Gasgemisches verstanden, das die Atmosphäre der Erde bildet. Insbesondere kann Luft verschiedene Drücke aufweisen, die jeweiligen Verhältnisse der einzelnen Komponenten von Luft können variieren und zusätzliche Komponenten können lokal hinzukommen. Typische Komponenten von Luft sind Stickstoff, Sauerstoff, Argon, Kohlendioxid oder Wasserdampf. Entscheidend für die vorliegende Erfindung ist, dass die Eigenschaften von Luft sich lokal nicht oder nur wenig verändern. Insbesondere sollten die lokalen Abweichungen in der Zusammensetzung von Luft nicht dieselbe Größenordnung haben wie sie durch die zu detektierenden Gaslecks hervorgerufen werden.

Unter der "Verdrängung eines zweiten Gases durch ein erstes Gas", wobei das zweite Gas eine Komponente eines Mediums ist, wird hier der zumindest teilweise Austausch der Gasteilchen des zweiten Gases durch Gasteilchen des ersten Gases in einem vorgegebenen Volumen verstanden. Verdrängung bedeutet nicht, dass die Konzentration des zweiten Gases nach dem Verdrängungsprozess grundsätzlich geringer ist als zuvor. Zum Beispiel wenn das erste Gas mit dem zweiten Gas identisch ist, wird die Konzentration nach dem Verdrängungsprozess höher sein, außer das Medium entspricht ebenfalls dem ersten Gas. Verdrängung kann auch solche Fälle bezeichnen, in welchen die ursprüngliche Konzentration des zweiten Gases in dem Medium Null oder nahe Null ist. Eine zu messende Konzentrationsänderung des zweiten Gases tritt dann natürlich nur auf, wenn das zweite Gas eine Komponente des ersten Gases ist.

Es ist eine zentrale Idee der vorliegenden Erfindung, dass Lecks nicht anhand einer Komponente des ausströmenden Gases, sondern durch die Konzentrationsänderung einer Komponente des umliegenden Mediums bestimmt werden. Dieses Funktionsprinzip könnte man als Gasverdrängung bezeichnen, insbesondere als Sauerstoffverdrängung, falls die Komponente des Mediums Sauerstoff ist. Im ersten Fall, also wenn eine Komponente des ausströmenden Gases detektiert wird, wäre die Anwendbarkeit eines Verfahrens zur Leckdetektion stark eingeschränkt, weil die mit dem Sensor bestimmbare Komponente im ausströmenden Gas notwendigerweise vorhanden sein muss. Ein möglicher Ausweg ist die Verwendung von Tracergasen, welcher aber zusätzlichen Aufwand bedeutet und häufig gar nicht praktikabel ist. Stattdessen die Konzentrationsänderung einer Komponente des umgebenden Mediums zu messen, macht das Verfahren besonders vielseitig, weil in einer überwiegenden Zahl von Anwendungsfällen das umgebende Medium tatsächlich Luft ist und weil es im Allgemeinen unwahrscheinlich ist, dass die Konzentration der zu messenden Komponente im ausströmenden ersten Gas tatsächlich dieselbe Konzentration ist im Vergleich mit Luft.

Gemäß einer weiteren Ausführungsform der Erfindung ist das zweite Gas Sauerstoff. Sauerstoff ist einer der beiden Hauptbestandteile von Luft (ca. 21%) neben Stickstoff (ca. 78%). Dementsprechend sind bei einem Gasleck erhebliche Konzentrationsänderungen von Sauerstoff zu erwarten, die entsprechend gut detektierbar sind. Zudem hat sich gezeigt, dass Sensoren auf Basis von Lumineszenz, wie sie in einer Ausführungsform eingesetzt werden können, besonders gut geeignet sind, Konzentrationsänderungen von Sauerstoff schnell und mit hoher Empfindlichkeit zu erfassen.

Gemäß einer weiteren Ausführungsform weist das Abtasten auf: Bewegen des Sensors relativ zu der Oberfläche mit einer Geschwindigkeit in einem Bereich von 0,01 m/s bis (x/0,01) m/s, insbesondere in einem Bereich von 0,02 m/s bis (x/0,05) m/s, wobei die Sensorschicht in Bewegungsrichtung x Meter lang ist, wobei x mindestens 0,001 ist.

Die möglichen Abtastgeschwindigkeiten relativ zur Oberfläche stehen in unmittelbarem Zusammenhang mit den Ansprechzeiten t90 des Sensors, die in einer Ausführungsform weiter unten genauer beschrieben werden. Je schneller der Sensor reagiert, umso größere Abtastgeschwindigkeiten sind mit dem Detektor möglich. Geschwindigkeiten unterhalb von 0,01 m/s sind insbesondere für Handdetektoren wie Handschnüffelsonden nicht geeignet, weil der Detektor zu lange an einem Ort verweilen müsste. Auch ist das Abtasten großer Oberflächen nicht praktikabel, wenn die Abtastgeschwindigkeit zu langsam ist.

Gemäß einer weiteren Ausführungsform weist das Verfahren ferner auf: Aussenden eines Warnsignals, falls die Änderung des Messsignals einen vorgegebenen Schwellwert überschreitet.

Die durch den Detektor gewonnene Information hat vorwiegend binären Charakter, nämlich ob an der derzeitigen Position des Sensors ein Leck vorliegt oder nicht. Um diese Information zu vermitteln, kann man daher ein einfaches Warnsignal vorsehen, das im Fall eines Lecks an der derzeitigen Position des Sensors aktiviert wird und ansonsten deaktiviert ist. So ein Warnsignal kann ein akustisches Signal sein, ein optisches Signal oder auch ein Vibrationssignal, welches beispielsweise über den Griff einer Handschnüffelsonde vermittelt wird (vgl. auch die Beschreibung einer späteren Ausführungsform, nach welcher stromführende Komponenten im Griff einer Handschnüffelsonde untergebracht sein können). Der Schwellwert kann vorgegeben sein, kann aber auch je nach Situation einstellbar sein oder durch eine Steuereinrichtung kalibriert werden.

Gemäß einer weiteren Ausführungsform ist die Sensorschicht der Vorrichtung eine aus Nanofasern gesponnene Sensorschicht, wobei die Nanofasern mit einem Lumineszenzfarbstoff dotiert sind.

Aus Nanofasern mit einem Durchmesser zwischen 50 nm und 1000 nm gesponnene Sensorschichten haben sich als besonders effektiv erwiesen, weil derartige Sensorschichten aufgrund der hohen Porosität im Vergleich mit einer kompakten Schicht ein hohes Verhältnis der Oberfläche zum Volumen aufweisen, insbesondere wenn die Sensorschichten aus übereinander angeordneten, ungeordneten Polymerfäden bestehen. Wenn nun diese Nanofasern mit einem Lumineszenzfarbstoff dotiert werden, bedingt die große Oberfläche unmittelbar eine hohe Sensitivität sowie niedrige Ansprechzeiten des Sensors, weil die Diffusionswege der Moleküle des zweiten Gases zu den Farbstoffmolekülen durch die Nanostrukturierung erheblich gesenkt werden.

Gemäß einer weiteren Ausführungsform hat der Sensor eine Ansprechzeit t90 von weniger als 1 s, insbesondere von weniger als 500 ms, insbesondere von weniger als 50 ms, insbesondere von 20 ms oder weniger. Die Ansprechzeit t90 kann dabei beispielsweise mindestens 1 ms betragen.

Die Ansprechzeit t90 ist hier definiert als diejenige Zeit, die ein Sensor benötigt, um bei einer Konzentrationsänderung des zu messenden Gases ab dem Zeitpunkt der Änderung ein Niveau von 90% der gesamten Signaldifferenz zwischen Ursprungszustand und Endzustand zu erreichen. Es kann sich dabei um einen Signalabfall oder einen Signalanstieg handeln. Wenn man beispielsweise bei einem O2 Sensor die Messumgebung schlagartig von 0% auf 100% Sauerstoff ändert, ist die Ansprechzeit t90 die Zeit, die der Sensor benötigt, vom Änderungszeitpunkt bis zur Anzeige von 90% Sauerstoffgehalt zu gelangen.

Die niedrigen Ansprechzeiten können unter anderem ermöglicht werden durch den beschriebenen Aufbau eines Sensors, der mit der Änderung von Lumineszenz in Abhängigkeit von der Konzentration eines Gases arbeitet, möglicherweise in Verbindung mit der Verwendung einer Sensorschicht aus gesponnenen Nanofasern. Es hat sich gezeigt, dass die Ansprechzeiten vor allem von der Beschaffenheit des Sensors abhängen und kaum von weiteren Faktoren wie der Konzentration des zu messenden Gases. Bei herkömmlichen O2 Sensoren liegt die Ansprechzeit im mehrfachen Sekundenbereich, ein Sensor mit den oben beschriebenen Eigenschaften hat hingegen üblicherweise eine Ansprechzeit t90 von ungefähr 20 ms.

Wie bereits bei einer früheren Ausführungsform erwähnt, steht die Ansprechzeit in engem Zusammenhang mit den möglichen Abtastgeschwindigkeiten eines Detektors, wobei sich der Zusammenhang näherungsweise wie folgt ergibt. Geht man von einer Sensorgröße mit x cm mal x cm aus und von einer Ansprechzeit t90 des Sensors von y s aus, dann ergibt sich als Größenordnung für eine maximale Abtastgeschwindigkeit x/y cm/s. Die maximale Abtastgeschwindigkeit ist in diesem Fall also definiert als maximale Geschwindigkeit, mit der mindestens ein Ausschlag von 90% der insgesamt möglichen Signaldifferenz erreicht wird. Mit den obenstehenden Zahlenwerten und einem quadratischen Sensor mit 1 cm Seitenlänge ergibt sich für eine Ansprechzeit t90 von 20 ms eine maximale Abtastgeschwindigkeit von 50 cm/s, während eine Ansprechzeit t90 von beispielsweise nur 5 s eine wenig praktikable maximale Abtastgeschwindigkeit von 0,2 cm/s ergeben würde.

Gemäß einer weiteren Ausführungsform ist der Sensor kleiner als 1 cm³. Der Sensor besitzt demnach ungefähr Fingernagelgröße. Die Größe des Sensors ist wiederum bedingt durch die besondere Funktionsweise des Sensors, die auf Lumineszenz beruht. Viele andere Typen von Sensoren sind nicht in diesem Ausmaß miniaturisierbar. Die kleine und kompakte Größe ist insbesondere dann relevant, wenn handhaltbare Sonden als Detektoren eingesetzt werden, aber auch wenn Lecks an unzugänglichen, engen oder verwinkelten Stellen geortet werden sollen.

Gemäß einer weiteren Ausführungsform weist die Vorrichtung ferner auf: eine längliche Halteeinrichtung, wobei der Sensor an einem ersten Ende der länglichen Halteeinrichtung angebracht ist. Die längliche Halteeinrichtung kann eine handhaltbare Vorrichtung (handheld device) oder eine Handschnüffelsonde, insbesondere eine stabförmige Handschnüffelsonde, sein, welche von einer Person zum Auffinden von Lecks verwendet wird. Die Person führt den Detektor einschließlich Sensor manuell über die zu untersuchende Oberfläche, um eventuelle Lecks aufzuspüren oder die Position eines bekannten Lecks zu bestimmen. Wie bereits betont, sind solche handhaltbaren Detektoren erst möglich aufgrund der geringen Ansprechzeiten des Sensors und der daraus resultierenden großen maximalen Abtastgeschwindigkeiten sowie aufgrund der kleinen Abmessungen des Sensors.

Gemäß einer weiteren Ausführungsform weist die längliche Halteeinrichtung der Vorrichtung an einem dem Sensor gegenüberliegenden zweiten Ende einen Griff auf, in welchem stromführende Komponenten der Vorrichtung angeordnet sind.

Ein "Griff" kann dabei eine spezifische ergonomische Form haben, die das Halten des Detektors erleichtert, oder auch nur das zweite Ende des Detektors bezeichnen, wenn es im Prinzip durch eine Person gehalten werden kann. Stromführende Komponenten sind stromführende oder elektronische Bauteile des Detektors. Insbesondere kann dies die Lichtquelle sein, die das Anregungslicht bereitstellt, der Lichtempfänger, der das Lumineszenzlicht empfängt und in ein Messsignal umwandelt, die Auswerteeinrichtung, die das Messsignal empfängt und verarbeitet, eine Einrichtung zum Aussenden des Warnsignals sowie weitere Module wie beispielsweise ein Bluetooth-Modul oder eine Batterie.

Insbesondere ist es im Rahmen der Erfindung vorgesehen *alle* stromführenden Komponenten der Vorrichtung in den Griff zu integrieren, das heißt alle gerade genannten Komponenten, wobei nur die Sensorschicht am ersten Ende des Detektors verbleibt. Dies kann erreicht werden, indem man zum Beispiel Glasfasern verwendet, an deren einem Ende die Sensorschicht sitzt und an deren anderem Ende sich die Lichtquelle und der Lichtempfänger mit allen weiteren elektronischen Komponenten befinden. Die Glasfasern koppeln also einerseits die Lichtquelle mit der Sensorschicht, indem sie das Anregungslicht übertragen, und andererseits die Sensorschicht mit dem Lichtempfänger, indem sie das Lumineszenzlicht übertragen. Eine solche Anordnung ist sinnvoll, um die stromführenden Komponenten in einem vorgegebenen Sicherheitsabstand von der Gefahrenzone eines möglichen Lecks zu platzieren, insbesondere falls es sich bei dem ersten Gas, das aus dem Leck ausströmt, um ein explosives oder leicht entzündliches Gas handelt.

Gemäß einer weiteren Ausführungsform sind stromführende Komponenten der Vorrichtung ausschließlich in dem Griff angeordnet. Teile oder Bereiche der Halteeinrichtung, die von dem Griff verschieden sind, sind demnach frei von stromführenden Komponenten.

Gemäß einer weiteren Ausführungsform weist die Vorrichtung ferner auf mindestens einen weiteren Sensor, wobei der weitere Sensor insbesondere ein weiterer opto-chemischer Sensor sein kann und Folgendes aufweisen kann: eine weitere Lichtquelle, die konfiguriert ist, ein weiteres Anregungslicht bereitzustellen, eine weitere Sensorschicht, die konfiguriert und angeordnet ist, in Antwort auf das weitere Anregungslicht ein weiteres Lumineszenzlicht auszustrahlen, und einen weiteren Lichtempfänger, der konfiguriert und angeordnet ist, das von der weiteren Sensorschicht ausgestrahlte weitere Lumineszenzlicht zu empfangen und in ein weiteres Messsignal umzuwandeln, wobei der Sensor und der weitere Sensor räumlich derart angeordnet sind, dass anhand der jeweiligen Messsignale eine relative Position des Gaslecks in der Oberfläche in Bezug auf eine aktuelle Position der Vorrichtung bestimmbar ist.

Bei dem mindestens einen weiteren Sensor kann es sich um eine beliebige Anzahl von Sensoren handeln, zum Beispiel nur ein weiterer, eine kleine Anzahl zwischen eins und zehn wie zwei, drei, vier, fünf, sechs, sieben, acht, neun oder zehn, oder auch eine größere Zahl weiterer Sensoren. Diese Sensoren haben üblicherweise alle denselben oben beschriebenen Aufbau. Insbesondere weisen sie alle eine Lichtquelle, eine Sensorschicht und einen Lichtempfänger auf. Kleinere Abweichungen sind möglich, beispielsweise können die jeweiligen Sensorschichten verschiedenen Abmessungen haben oder sie können konfiguriert sein, unterschiedliche Gase zu detektieren.

Ein wichtiger Vorteil eines Detektors mit mehreren Sensoren ist, dass aus den jeweiligen Messsignalen der verschiedenen Sensoren unter Berücksichtigung der räumlichen Anordnung der Sensoren Rückschlüsse gezogen werden können auf die relative Position des Lecks in Bezug auf den Detektor, insbesondere in Bezug auf die räumliche Anordnung der Sensoren im Detektor. Beispielsweise ist zu erwarten, dass bei einer Anordnung mit zwei Sensoren das Gasleck näher bei dem Sensor lokalisiert ist, dessen Messsignal die größere Intensität hat. Generell gilt, dass bei einer Anordnung mit beliebig vielen Sensoren das Gasleck dem Sensor am nächsten ist, dessen Messsignal die größte Intensität hat, dem Sensor am zweitnächsten, dessen Messsignal die zweitgrößte Intensität hat, und so fort. Der Vergleich der Messsignale und die Bestimmung der relativen Position kann von der Auswerteeinrichtung vorgenommen werden. Es ist auch vorstellbar, dass die Auswerteeinrichtung derart kalibriert wird, dass sie das Verhältnis der Abstände des Lecks zu einer Anzahl von Sensoren aus dem entsprechenden Verhältnis der Messsignale dieser Sensoren berechnen kann.

Vor allem bei einem Detektor mit einer größeren Anzahl von Sensoren ist ein Vorteil, dass sich die Fläche verkleinert, über welche der Detektor bewegt werden muss. Wenn beispielsweise die Anordnung der Sensoren die volle Ausdehnung einer abzutastenden Oberfläche in einer Dimension abdeckt, so muss der Detektor nur noch entlang der dazu orthogonalen Dimension bewegt werden. Dies ist zum Beispiel der Fall bei einer weiter unten beschriebenen Ausführungsform zum Detektieren von Lecks an Rohrleitungen.

Gemäß einer weiteren Ausführungsform weist die Vorrichtung ferner auf eine Verschiebeeinrichtung, welche eine stationäre Komponente und eine bewegliche Komponente aufweist, wobei der Sensor und/oder der weitere Sensor an der beweglichen Komponente angebracht sind.

Wie bereits ausgeführt, können der Sensor und/oder der weitere Sensor eine beliebige Anzahl von Sensoren größer oder gleich eins sein. Die stationäre Komponente kann beispielsweise ein fest installierter Rahmen sein und die bewegliche Komponente ein beweglicher Schlitten, der sich relativ zu dem Rahmen bewegen lässt. Eine solche Anordnung hat den Vorteil, dass der Abtastvorgang weiter automatisiert werden kann. Zum Beispiel kann auf diese Weise eine automatische Qualitätsprüfung von normierten Teilen wie Rohrleitungen, Kanistern oder Tanks durchgeführt werden.

Gemäß einer weiteren Ausführungsform ist die Auswerteeinrichtung konfiguriert, basierend auf dem Messsignal und dem weiteren Messsignal eine relative Position des Gaslecks in der Oberfläche in Bezug auf eine aktuelle Position der beweglichen Komponente der Verschiebeeinrichtung zu bestimmen.

Insbesondere kann die Auswerteeinrichtung aus den jeweiligen Messsignalen der Sensoren sowie aus der relativen Position der beweglichen zur stationären Komponente der Verschiebeeinrichtung die relative Position des Lecks in Bezug auf die stationäre Komponente der Verschiebeeinrichtung bestimmen. Die relative Position der beweglichen zur stationären Komponente kann beispielsweise aus der Abtastgeschwindigkeit und dem Anfangszeitpunkt des Abtastvorgangs errechnet werden.

Deckt die Anordnung der Sensoren wie oben beschrieben die Ausdehnung der abzutastenden Oberfläche in einer ersten Dimension vollständig ab, so muss die bewegliche Komponente nur entlang einer weiteren Dimension, also nur entlang einer Linie und nicht in einer Fläche, beweglich sein, um die Oberfläche vollständig abzutasten. Die Lage eines Lecks in Bezug auf die erste Dimension kann aus den jeweiligen Messsignalen der Sensoren bestimmt werden.

Gemäß einer weiteren Ausführungsform sind der Sensor und der weitere Sensor entlang einer geschlossenen Linie angeordnet, welche eine zweidimensionale Form einschließt, die eine Symmetrieachse aufweist, und sind die Sensoren, entlang der (parallel zu der) Symmetrieachse beweglich.

Der Sensor und der weitere Sensor können wieder eine beliebige Anzahl von Sensoren größer oder gleich eins sein, wobei diese vorteilhafterweise denselben Aufbau haben. Eine zweidimensionale Form kann hier beispielsweise ein Kreis, ein Oval, ein Quadrat, ein Rechteck, ein Vieleck oder eine beliebige zweidimensionale Form mit endlicher Fläche sein. Die geschlossene Linie bezeichnet dann den Umfang dieser zweidimensionalen Form. Die Symmetrieachse schneidet die zweidimensionale Form üblicherweise in einer Mitte der Form und liegt nicht in derselben Ebene, welche durch die zweidimensionale Form aufgespannt wird. Insbesondere kann die Symmetrieachse lokal senkrecht stehen auf der Ebene, die durch die zweidimensionale Form aufgespannt wird. Die Sensoren sind entlang der Symmetrieachse beweglich aber nicht notwendigerweise entlang der geschlossenen Linie.

Beispielsweise kann die zweidimensionale Form der Querschnitt eines Gasrohres sein und die Symmetrieachse einen Weg entlang des Rohres beschreiben. Die Sensoren sind dann beispielweise in einer Schlaufe oder einem Ring um den Querschnitt des Rohres angeordnet. Eine solche Schlaufe oder ein solcher Ring können jede Art von Halterung sein, die zumindest einen Sensor aufnehmen kann oder Halteeinrichtungen für zumindest einen Sensor aufweist. Sie können aus unterschiedlichen Materialen bestehen, beispielsweise aus Metall oder auch aus einem dehnbaren Stoff.

Die Schlaufe oder der Ring wird entlang des Rohres bewegt, um etwaige Lecks in der Oberfläche des Rohres zu detektieren. Wenn der gesamte Umfang von Sensoren abgedeckt wird, muss der Ring nur entlang des Rohres bewegt werden, nicht aber in sich gedreht werden, um die Oberfläche des Rohres vollständig abzutasten. Eine gewisse Flexibilität des Rings ist vorteilhaft, um beispielsweise auch gebogene Rohre vollständig abzufahren. Aus demselben Grund kann auch die Richtung der Symmetrieachse lokal variieren.

Gemäß einer weiteren Ausführungsform ist die geschlossene Linie ein Kreis. Dies ist vorteilhaft, weil der Querschnitt von vielen Rohrleitungen, aber auch Kanistern oder Tanks kreisförmig oder ringförmig ist.

Gemäß einer weiteren Ausführungsform liegt ein Abstand zwischen benachbarten Sensoren im Bereich zwischen 0 cm und 5 cm, insbesondere im Bereich zwischen 1 cm und 3 cm.

Als benachbart können Sensoren dann angesehen werden, wenn sie entlang der geschlossenen Linie benachbart sind und wenn vorgesehen ist, dass das Verhältnis ihrer Messsignale zur Bestimmung der relativen Position eines Gaslecks zwischen den beiden Sensoren herangezogen wird. Der Abstand zwischen benachbarten Sensoren sollte nicht zu groß sein, da sonst die räumliche Auflösung des Detektors beeinträchtigt ist, zum Beispiel die Position eines Gaslecks zwischen zwei Sensoren nicht mit einer vorgegebenen Genauigkeit bestimmt werden kann oder schlimmstenfalls ein Gasleck zwischen zwei Sensoren gar nicht detektiert wird. Andererseits sollte der Abstand bereits aus Effizienzüberlegungen nicht zu klein sein, da eine größere Dichte von Sensoren unter Umständen keine weiteren oder nur geringe Vorteile in der Auflösung bedingt, aber zusätzlichen Aufwand verursacht.

Gemäß einer weiteren Ausführungsform weist die Vorrichtung eine Steuereinrichtung auf, welche konfiguriert ist, ein hierin beschriebenes Verfahren durchzuführen, insbesondere ein Abtasten der Oberfläche durch die bewegliche Komponente der Verschiebeeinrichtung zu steuern. Eine solche Steuereinrichtung ist nützlich, den Abtastvorgang zu automatisieren. Vorteilhafterweise sendet die Steuereinrichtung ein Signal an die Auswerteeinrichtung, welches insbesondere Informationen über die derzeitige Position der beweglichen Komponente enthält. Umgekehrt kann die Auswerteeinrichtung ein Signal an die Steuereinrichtung senden, um beispielsweise einen Abtastvorgang zu starten, der die Position eines detektierten Gaslecks noch genauer bestimmt.

Es wird darauf hingewiesen, dass Ausführungsformen der Erfindung mit Bezug auf unterschiedliche Erfindungsgegenstände beschrieben wurden. Insbesondere sind einige Ausführungsformen der Erfindung in Bezug auf eine Vorrichtung und andere Ausführungsformen der Erfindung in Bezug auf ein Verfahren beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

Weitere Vorteile und Merkmale der vorliegenden Erfindung ergeben sich aus der folgenden beispielhaften Beschreibung derzeit bevorzugter Ausführungsformen. Die einzelnen Figuren der Zeichnung dieses Dokuments sind lediglich als schematisch und als nicht maßstabsgetreu anzusehen.

### Kurze Beschreibung der Zeichnungen

Figur 1 zeigt schematisch unter anderem eine Vorrichtung zur Detektion eines Gaslecks, die geeignet ist, ein Verfahren zur Detektion eines Gaslecks durchzuführen, gemäß einer beispielhaften Ausführungsform.
Figur 2 zeigt eine weitere beispielhafte Ausführungsform einer Vorrichtung zur Detektion eines Gaslecks, die als eine Handschnüffelsonde zum Detektieren von Gaslecks ausgestaltet ist.
Figur 3 zeigt noch eine weitere beispielhafte Ausführungsform einer Vorrichtung zur Detektion eines Gaslecks mit einer ringförmigen Anordnung mehrerer Sensoren sowie einer Verschiebeeinrichtung und einer Steuereinrichtung.
Figur 4 zeigt im Detail die ringförmige Anordnung der Sensoren aus Figur 3.

### Detaillierte Beschreibung

Es wird darauf hingewiesen, dass in der folgenden detaillierten Beschreibung Merkmale bzw. Komponenten von unterschiedlichen Ausführungsformen, die mit den entsprechenden Merkmalen bzw. Komponenten von einer anderen Ausführungsform nach gleich oder zumindest funktionsgleich sind, mit den gleichen Bezugszeichen oder mit Bezugszeichen versehen sind, welche in den letzten beiden Ziffern identisch sind mit den Bezugszeichen von entsprechenden gleichen oder zumindest funktionsgleichen Merkmalen bzw. Komponenten. Zur Vermeidung von unnötigen Wiederholungen werden bereits anhand einer vorher beschriebenen Ausführungsform erläuterte Merkmale bzw. Komponenten an späterer Stelle nicht mehr im Detail erläutert.

Ferner wird darauf hingewiesen, dass die nachfolgend beschriebenen Ausführungsformen lediglich eine beschränkte Auswahl an möglichen Ausführungsvarianten der Erfindung darstellen. Insbesondere ist es möglich, die Merkmale einzelner Ausführungsformen in geeigneter Weise miteinander zu kombinieren, so dass für den Fachmann mit den hier explizit dargestellten Ausführungsvarianten eine Vielzahl von verschiedenen Ausführungsformen als offensichtlich offenbart anzusehen sind.

Außerdem wird darauf hingewiesen, dass raumbezogene Begriffe, wie beispielsweise "vorne" und "hinten", "oben" und "unten", "links" und "rechts", etc. verwendet werden, um die Beziehung eines Elements zu einem anderen Element oder zu anderen Elementen zu beschreiben, wie in den Figuren veranschaulicht. Demnach können die raumbezogenen Begriffe für Ausrichtungen gelten, welche sich von den Ausrichtungen unterscheiden, die in den Figuren dargestellt sind. Es versteht sich jedoch von selbst, dass sich alle solchen raumbezogenen Begriffe der Einfachheit der Beschreibung halber auf die in den Zeichnungen dargestellten Ausrichtungen beziehen und nicht unbedingt einschränkend sind, da die jeweils dargestellte Vorrichtung, Komponente etc., wenn sie in Verwendung ist, Ausrichtungen annehmen kann, die von den in der Zeichnung dargestellten Ausrichtungen verschieden sein können.

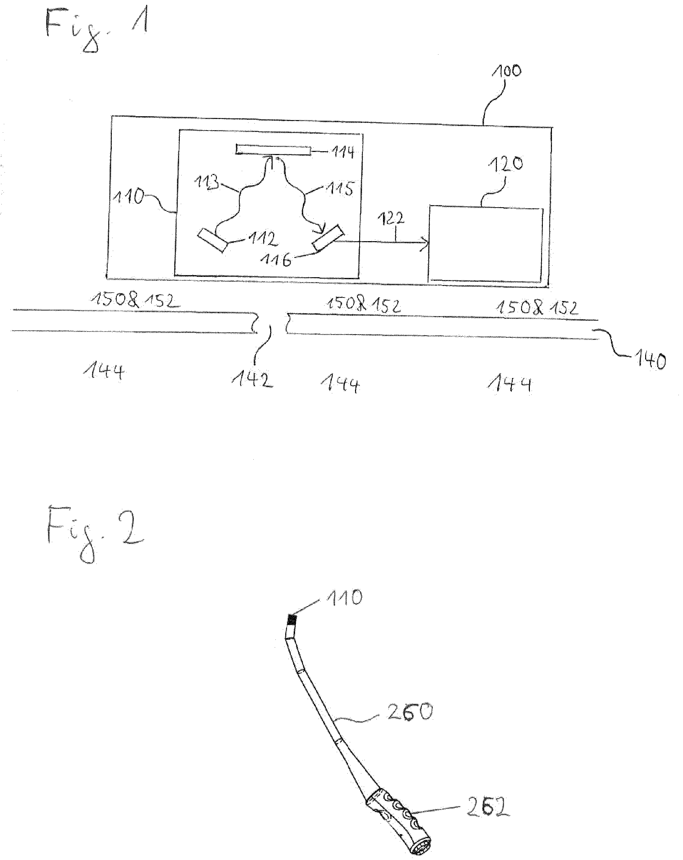

Figur 1 zeigt einen Aufbau gemäß einer Ausführungsform der Erfindung, ein Verfahren zur Detektion eines Gaslecks 142 durchzuführen. Ein solches Verfahren weist auf ein Abtasten einer Oberfläche 140, die ein Volumen mit einem ersten Gas 144 zumindest teilweise begrenzt. Das Abtasten geschieht mittels einer Vorrichtung 100, die einen Sensor 110 aufweist, wobei der Sensor 110 insbesondere ein opto-chemischer Sensor ist. Der Sensor weist auf erstens eine Lichtquelle 112, die konfiguriert ist, ein Anregungslicht 113 bereitzustellen, zweitens eine Sensorschicht 114, die konfiguriert und angeordnet ist, in Antwort auf das Anregungslicht 113 ein Lumineszenzlicht 115 auszustrahlen, und drittens einen Lichtempfänger 116, der konfiguriert und angeordnet ist, das von der Sensorschicht 114 ausgestrahlte Lumineszenzlicht 115 zu empfangen und in ein Messsignal 122 umzuwandeln. Das Verfahren weist ferner auf ein Detektieren, mittels des Sensors 110, einer Änderung einer Konzentration eines zweiten Gases 152 in einem Medium 150, welches den Sensor 110 umgibt. Das Detektieren geschieht anhand einer Änderung des Messsignals 122, die verursacht wird durch eine Änderung von zumindest einem von einer Intensität, einem Spektrum, einer Phasenverschiebung und einer Abklingzeit des empfangenen Lumineszenzlichts 115 in Abhängigkeit von der Änderung der Konzentration des zweiten Gases 152 in dem Medium 150.

Eine Vorrichtung 110 zur Detektion von Gaslecks 142 gemäß einer Ausführungsform der Erfindung weist neben den oben eingeführten Sensoren eine Auswerteeinrichtung 120 auf zum Empfangen und Verarbeiten des Messsignals 122. Dabei ist die Auswerteeinrichtung 120 konfiguriert, die Änderung der Konzentration des zweiten Gases 152 in dem Medium 150, welches den Sensor 110 umgibt, zu detektieren anhand einer Änderung des Messsignals 122.

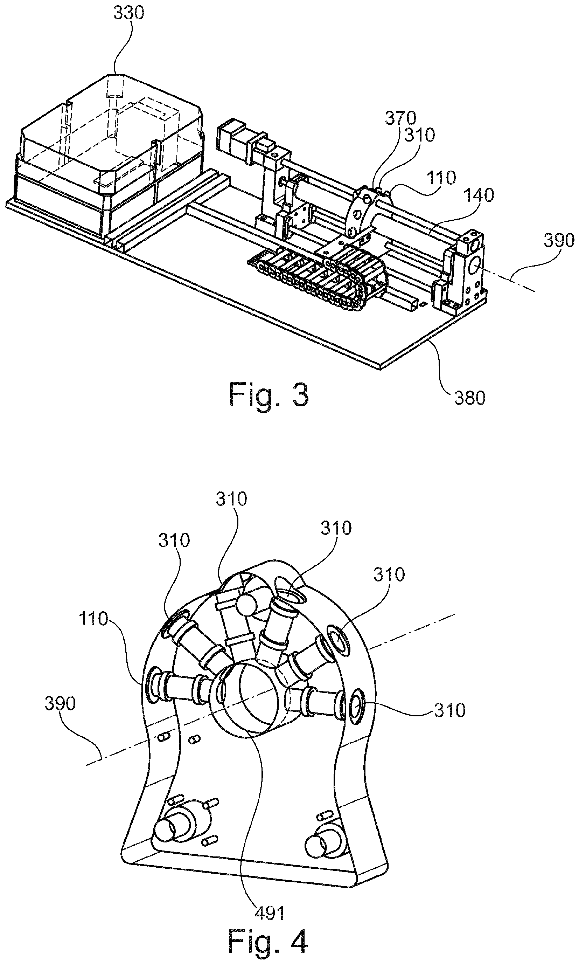

Figur 2 zeigt eine Handschnüffelsonde zum Detektieren von Gaslecks 142. Die Handschnüffelsonde ist eine Ausführungsform einer erfindungsgemäßen Vorrichtung 100 zum Detektieren von Gaslecks 142, wobei die Vorrichtung 100 eine längliche Halteeinrichtung 260 aufweist. An einem ersten Ende der länglichen Halteeinrichtung 260 sind ein Sensor 110 und möglicherweise weitere Sensoren 310 (nicht gezeigt in Figur 2, vergleiche beispielsweise Figur 4) angebracht. An einem zweiten, dem ersten gegenüberliegenden Ende kann ein Griff 262 vorgesehen sein. In diesem Griff 262 können stromführende Komponenten der Vorrichtung 100 untergebracht oder integriert sein. Insbesondere können alle stromführenden Komponenten einschließlich der Lichtquelle 112, des Lichtempfängers 116 und der Auswerteeinrichtung 120 in den Griff 262 integriert sein, so dass nur die Sensorschicht 114 am ersten Ende der länglichen Halteeinrichtung 260 verbleibt. Die Übertragung des Anregungslichts 113 und des Lumineszenzlichts 115 von und zur Sensorschicht 114 ist beispielsweise über Glasfasern möglich.

Figur 3 zeigt einen Aufbau zur Leckdetektion mit einer ringförmigen Anordnung mehrerer Sensoren 110, 310 sowie einer Verschiebeeinrichtung und einer Steuereinrichtung 330. Die Verschiebeeinrichtung weist eine bewegliche Komponente 370 auf und eine stationäre Komponente 380. Die bewegliche Komponente 370, hier ein beweglicher Schlitten, weist eine Vorrichtung auf, in der eine Vielzahl von Detektoren ringförmig angeordnet sind. Die ringförmige Anordnung umschließt ein mit Gas gefülltes Rohr mit einer Oberfläche 140, welche auf Gaslecks 142 untersucht werden soll. Das Gasrohr hat eine Querschnittsfläche, die eine Symmetrieachse 390 aufweist. Durch Bewegen der beweglichen Komponente 370 entlang der Symmetrieachse 390 können die Sensoren 110, 310 der ringförmigen Anordnung die Oberfläche 140 des Gasrohrs abtasten und etwaige Gaslecks detektieren. Die stationäre Komponente 380 weist unter anderem einen stationären Rahmen auf, zudem eine Auswerteeinrichtung 120 und eine Steuereinrichtung 330. Letztere steuert das Bewegen der beweglichen Komponente 370 der Verschiebeeinrichtung entlang der Symmetrieachse 390 und damit den Abtastvorgang.

Figur 4 zeigt im Detail die ringförmige Anordnung der Sensoren 110, 310 aus Figur 3, welche Teil der beweglichen Komponente 370 der Verschiebevorrichtung ist und die abzutastende Oberfläche 140 zum Beispiel eines Gasrohrs umschließt. Die bewegliche Komponente 370 einschließlich der ringförmigen Anordnung ist entlang einer Symmetrieachse 390 beweglich. Die bewegliche Komponente weist Aufnahmevorrichtungen für einen Sensor 110 und weitere Sensoren 310 auf. Die Sensoren 110, 310 sind dabei entlang einer geschlossenen Linie 491 angeordnet, die eine zweidimensionale Form aufspannt, welche lokal die Symmetrieachse 390 aufweist.

### BEZUGSZEICHEN:

- 100: Vorrichtung
- 110: Sensor
- 112: Lichtquelle
- 113: Anregungslicht
- 114: Sensorschicht
- 115: Lumineszenzlicht
- 116: Lichtempfänger
- 120: Auswerteeinrichtung
- 122: Messsignal
- 140: Oberfläche
- 142: Gasleck
- 144: erstes Gas
- 150: Medium
- 152: zweites Gas
- 260: längliche Halteeinrichtung
- 262: Griff
- 310: weiterer Sensor
- 330: Steuereinrichtung
- 370: bewegliche Komponente
- 380: stationäre Komponente
- 390: Symmetrieachse
- 491: geschlossene Linie

## Patentansprüche

1. Ein Verfahren zum Detektieren eines Gaslecks (142), das Verfahren aufweisend:
Abtasten einer Oberfläche (140), die ein Volumen mit einem ersten Gas (144) zumindest teilweise begrenzt, mittels einer Vorrichtung (100), die einen Sensor (110) aufweist,
wobei der Sensor (110) insbesondere ein opto-chemischer Sensor ist und Folgendes aufweist:
eine Lichtquelle (112), die konfiguriert ist, ein Anregungslicht (113) bereitzustellen,
eine Sensorschicht (114), die konfiguriert und angeordnet ist, in Antwort auf das Anregungslicht (113) ein Lumineszenzlicht (115) auszustrahlen, und
einen Lichtempfänger (116), der konfiguriert und angeordnet ist, das von der Sensorschicht (114) ausgestrahlte Lumineszenzlicht (115) zu empfangen und in ein Messsignal (122) umzuwandeln;
Detektieren, mittels des Sensors (110), einer Änderung einer Konzentration eines zweiten Gases (152) in einem Medium (150), welches den Sensor (110) umgibt, anhand einer Änderung des Messsignals (122), die verursacht wird durch eine Änderung von zumindest einem von einer Intensität, einem Spektrum, einer Phasenverschiebung und einer Abklingzeit des empfangenen Lumineszenzlichts (115) in Abhängigkeit von der Änderung der Konzentration des zweiten Gases (152) in dem Medium (150),
wobei die Änderung der Konzentration des zweiten Gases (152) in dem Medium (150) verursacht wird durch ein Ausströmen des ersten Gases (144) aus dem Gasleck (142) in das Medium (150),
wobei das Abtasten ein Abfahren und/oder Überstreichen ist.

2. Das Verfahren gemäß Anspruch 1, wobei das Medium (150) Luft ist, das zweite Gas (152) eine Komponente von Luft ist und die Änderung der Konzentration des zweiten Gases (152) verursacht wird durch eine Verdrängung des zweiten Gases (152), welche verursacht wird durch ein Ausströmen des ersten Gases (144) durch das Gasleck (142), wobei insbesondere das zweite Gas (152) Sauerstoff ist.

3. Das Verfahren gemäß einem der vorherigen Ansprüche, wobei das Abtasten aufweist:
Bewegen des Sensors (110) relativ zu der Oberfläche (140) mit einer Geschwindigkeit in einem Bereich von 0,01 m/s bis (x/0,01) m/s, insbesondere in einem Bereich von 0,02 m/s bis (x/0,05) m/s, wobei die Sensorschicht in Bewegungsrichtung x Meter lang ist, wobei x mindestens 0,001 ist.

4. Das Verfahren gemäß einem der vorherigen Ansprüche, ferner aufweisend:
Aussenden eines Warnsignals, falls die Änderung des Messsignals (122) einen vorgegebenen Schwellwert überschreitet.

5. Eine Vorrichtung (100) zum Abtasten einer Oberfläche und Detektieren eines Gaslecks (142) in der Oberfläche (140), die ein Volumen mit einem ersten Gas (144) zumindest teilweise begrenzt, insbesondere mittels eines Verfahrens gemäß einem der Ansprüche 1 bis 5, die Vorrichtung (100) aufweisend:
einen Sensor (110) zum Detektieren einer Änderung einer Konzentration eines zweiten Gases (152) in einem Medium (150), welches den Sensor (110) umgibt,
wobei der Sensor (110) insbesondere ein opto-chemischer Sensor ist und Folgendes aufweist:
eine Lichtquelle (112), die konfiguriert ist, ein Anregungslicht (113) bereitzustellen,
eine Sensorschicht (114), die konfiguriert und angeordnet ist, in Antwort auf das Anregungslicht (113) ein Lumineszenzlicht (115) auszustrahlen, und
einen Lichtempfänger (116), der konfiguriert und angeordnet ist, das von der Sensorschicht (114) ausgestrahlte Lumineszenzlicht (115) zu empfangen und in ein Messsignal (122) umzuwandeln; und
eine Auswerteeinrichtung (120) zum Empfangen und Verarbeiten des Messsignals (122), wobei die Auswerteeinrichtung (120) konfiguriert ist, die Änderung der Konzentration des zweiten Gases (152) in dem Medium (150), welches den Sensor (110) umgibt, zu detektieren anhand einer Änderung des Messsignals (122), die verursacht wird durch eine Änderung von zumindest einem von einer Intensität, einem Spektrum, einer Phasenverschiebung und einer Abklingzeit des empfangenen Lumineszenzlichts (115) in Abhängigkeit von der Änderung der Konzentration des zweiten Gases (152) in dem Medium (150);
wobei die Änderung der Konzentration des zweiten Gases (152) in dem Medium (150) verursacht wird durch ein Ausströmen des ersten Gases (144) aus dem Gasleck (142) in das Medium (150);
wobei das Abtasten ein Abfahren und/oder Überstreichen ist.

6. Die Vorrichtung (100) gemäß Anspruch 5, aufweisend zumindest eines der folgenden Merkmale:
die Sensorschicht (114) ist eine aus Nanofasern gesponnene Sensorschicht, wobei die Nanofasern mit einem Lumineszenzfarbstoff dotiert sind;
der Sensor (110) hat eine Ansprechzeit t90 von weniger als 1 s, insbesondere von weniger als 500ms, insbesondere von weniger als 50 ms;
der Sensor (110) hat ein Volumen von kleiner als 1 cm³.

7. Die Vorrichtung (100) gemäß einem der Ansprüche 5 oder 6, die Vorrichtung (110) ferner aufweisend:
eine längliche Halteeinrichtung (260), wobei der Sensor (110) an einem ersten Ende der länglichen Halteeinrichtung (260) angebracht ist.

8. Die Vorrichtung (100) gemäß Anspruch 7, wobei die längliche Halteeinrichtung (260) an einem dem Sensor (110) gegenüberliegenden zweiten Ende einen Griff (262) aufweist, in welchem stromführende Komponenten der Vorrichtung (100) angeordnet sind.

9. Die Vorrichtung (100) gemäß Anspruch 8, wobei stromführende Komponenten der Vorrichtung (100) ausschließlich in dem Griff (262) angeordnet sind.

10. Die Vorrichtung (110) gemäß einem der Ansprüche 5 bis 9, ferner aufweisend mindestens einen weiteren Sensor (310),
wobei der weitere Sensor (310) insbesondere ein opto-chemischer Sensor ist und Folgendes aufweist:
eine weitere Lichtquelle, die konfiguriert ist, ein weiteres Anregungslicht bereitzustellen,
eine weitere Sensorschicht, die konfiguriert und angeordnet ist, in Antwort auf das weitere Anregungslicht ein weiteres Lumineszenzlicht auszustrahlen, und
einen weiteren Lichtempfänger, der konfiguriert und angeordnet ist, das von der weiteren Sensorschicht ausgestrahlte weitere Lumineszenzlicht zu empfangen und in ein weiteres Messsignal umzuwandeln,
wobei der Sensor (110) und der weitere Sensor (310) räumlich derart angeordnet sind, dass anhand der jeweiligen Messsignale eine relative Position des Gaslecks (142) in der Oberfläche (140) in Bezug auf eine aktuelle Position der Vorrichtung (100) bestimmbar ist.

11. Die Vorrichtung (100) gemäß einem der Ansprüche 5 bis 10, ferner aufweisend
eine Verschiebeeinrichtung, welche eine stationäre Komponente (380) und eine bewegliche Komponente (370) aufweist, wobei der Sensor (110) und/oder der weitere Sensor (310) an der beweglichen Komponente (370) angebracht sind.

12. Die Vorrichtung (100) gemäß Anspruch 11, wobei die Auswerteeinrichtung (120) konfiguriert ist, basierend auf dem Messsignal (122) und dem weiteren Messsignal eine relative Position des Gaslecks (142) in der Oberfläche (140) in Bezug auf eine aktuelle Position der beweglichen Komponente (370) der Verschiebeeinrichtung zu bestimmen.

13. Die Vorrichtung (100) gemäß einem der Ansprüche 10 bis 12, wobei
der Sensor (110) und der weitere Sensor (310) angeordnet sind entlang einer geschlossenen Linie (491), welche eine zweidimensionale Form einschließt, die eine Symmetrieachse (390) aufweist, und
die Sensoren (110, 310) entlang der Symmetrieachse (390) beweglich sind.

14. Die Vorrichtung (100) gemäß Anspruch 13, aufweisend zumindest eines der folgenden Merkmale:
die geschlossene Linie (491) ist ein Kreis;
ein Abstand zwischen benachbarten Sensoren (110, 310) liegt im Bereich zwischen 0 cm und 5 cm, insbesondere im Bereich zwischen 1 cm und 3 cm.

15. Die Vorrichtung (100) gemäß einem der Ansprüche 11 bis 14, ferner aufweisend
eine Steuereinrichtung (330), welche konfiguriert ist ein Verfahren gemäß einem der Ansprüche 1 bis 5 durchzuführen, insbesondere ein Abtasten der Oberfläche (140) durch die bewegliche Komponente (370) der Verschiebeeinrichtung zu steuern.

## Claims

1. A method for detecting a gas leak (142), the method comprising:
scanning a surface (140), which delimits a volume with a first gas (144) at least partially, by means of a device (100) comprising a sensor (110),
wherein the sensor (110) in particular is an opto-chemical sensor and comprises the following:
a light source (112), configured for providing an excitation light (113), a sensor layer (114), configured and arranged for emitting in response to the excitation light (113) a luminescence light (115), and
a light receiver (116), configured and arranged for receiving the luminescence light (115) emitted from the sensor layer (114) and converting it into a measurement signal (122);
detecting, by means of the sensor (110), a change in concentration of a second gas (152) in a medium (150) surrounding the sensor (110), on the basis of a change in the measurement signal (122), which is caused by a change in at least on of an intensity, a spectrum, a phase shift, and a decay time of the received luminescence light (115) as a function of the change in the concentration of the second gas (152) in the medium (150),
wherein the change in the concentration of the second gas (152) in the medium (150) is caused by a leakage of the first gas (144) out of the gas leak (142) into the medium (150),
wherein the scanning is a tracing and/or a sweeping.

2. The method according to claim 1, wherein the medium (150) is air, the second gas (152) is a component of air, and the change in the concentration of the second gas (152) is caused by a displacement of the second gas (152), which displacement is caused by a leakage of the first gas (144) out of the gas leak (142), wherein in particular the second gas (152) is oxygen.

3. The method according to one of the preceding claims, wherein the scanning comprises:
moving the sensor (110) relative to the surface (140) with a speed in the range from 0.01 m/s to (x/0.01) m/s, in particular in a range from 0.02 m/s to (x/0.05) m/s, wherein the sensor layer in moving direction has a length of x meters, wherein x is at least 0.001.

4. The method according to one of the preceding claims, further comprising:
emitting a warning signal if the change in the measurement signal (122) exceeds a predetermined threshold.

5. A device (100) for scanning a surface and for detecting a gas leak (142) in the surface (140) delimiting at least partially a volume with a first gas (144), in particular with the method according to any one of the claims 1 to 5, the device (100) comprising:
a sensor (110) for detecting a change in concentration of a second gas (152) in a medium (150) surrounding the sensor (110),
wherein the sensor (110) in particular is an opto-chemical sensor and comprises the following:
a light source (112), configured for providing an excitation light (113), a sensor layer (114), configured and arranged for emitting in response to the excitation light (113) a luminescence light (115), and
a light receiver (116), configured and arranged for receiving the luminescence light (115) emitted from the sensor layer (114) and converting it into a measurement signal (122); and
an evaluation unit (120) for receiving and processing the measurement signal (122), wherein the evaluation unit (120) is configured for detecting, by means of the sensor (110), the change in concentration of a second gas (152) in a medium (150) surrounding the sensor (110), on the basis of a change in the measurement signal (122), which is caused by a change in at least one of an intensity, a spectrum, a phase shift, and a decay time of the received luminescence light (115) as a function of the change in the concentration of the second gas (152) in the medium (150),
wherein the change in the concentration of the second gas (152) in the medium (150) is caused by a leakage of the first gas (144) out of the gas leak (142) into the medium (150),
wherein the scanning is a tracing and/or a sweeping.

6. The device (100) according to claim 5, comprising at least one of the following features:
the sensor layer (114) is sensor layer spun from nano fibers, wherein the nano fibers are doped with a luminescence dye;
the sensor (110) has a response time t90 of less than 1 s, in particular of less than 500 ms, in particular of less than 50 ms;
the sensor (110) has a volume of less than 1 cm³.

7. The device (100) according to one of the claims 5 or 6, the device (110) further comprising:
an oblong holding unit (260), wherein the sensor (110) is fixed to a first end of the oblong holding unit (260).

8. The device (100) according to claim 7, wherein the oblong holding unit (260) comprises at a second end opposing the sensor (110) a handle (262), in which current-carrying components of the device (100) are arranged.

9. The device (100) according to claim 8, wherein the current-carrying components of the device (100) are arranged exclusively in the handle (262).

10. The device (100) according to one of the claims 5 to 9, further comprising at least one further sensor (310),
wherein the further sensor (310) is in particular an opto-chemical sensor and comprises the following:
a further light source, configured for providing a further excitation light,
a further sensor layer, configured and arranged for emitting in response to the further excitation light a further luminescence light, and
a further light receiver, configured and arranged for receiving the further luminescence light emitted from the further sensor layer and converting it into a further measurement signal,
wherein the sensor (110) and the further sensor (310) are spatially arranged such, that on the basis of the respective measurement signals a relative position of the gas leak (142) in the surface with respect to an actual position of the device (100) is determinable.

11. The device (100) according to one of the claims 5 to 10, further comprising
a moving unit comprising a stationary component (380) and a movable component (370), wherein the sensor (110) and/or the further sensor (310) is/are fixed to the movable component (370).

12. The device (100) according to claim 11, wherein the evaluation unit (120) is configured to determine, based on the measurement signal (122) and the further measurement signal, a relative position of the gas leak (142) in the surface (140) with respect to an actual position of the movable component (370) of the moving unit.

13. The device (100) according to one of the claims 10 to 12, wherein
the sensor (110) and the further sensor (310) are arranged along a closed line (491), which encloses a two-dimensional form comprising an axis of symmetry (390), and wherein
the sensors (110, 310) are movable along the axis of symmetry (390).

14. The device (100) according to claim 13, comprising at least one of the following features:
the closed line (491) is a circle;
a distance between neighboring sensors (110, 310) lies in the range between 0 cm and 5 cm, in particular in the range between 1 cm and 3 cm.

15. The device (100) according to one of the claims 11 to 14, further comprising
a control unit (330), which is configured for executing a method according one of the claims 1 to 5, in particular configured for controlling a scanning of the surface (140) by means of the movable component (370) of the moving unit.

## Revendications

1. Procédé pour détecter une fuite de gaz (142), le procédé présentant :
l'exploration d'une surface (140), qui délimite au moins en partie un volume avec un premier gaz (144), au moyen d'un dispositif (100), qui présente un capteur (110),
**caractérisé en ce que** le capteur (110) est en particulier un capteur opto-chimique et présente ce qui suit :
une source de lumière (112), qui est configurée pour fournir une lumière d'excitation (113),
une couche de détection (114), qui est configurée et disposée pour émettre une lumière luminescente (115) en réponse à la lumière d'excitation (113), et
un récepteur de lumière (116), qui est configuré et disposé pour recevoir la lumière luminescente (115) émise par la couche de détection (114) et la convertir en un signal de mesure (122) ;
la détection, au moyen du capteur (110), d'une modification d'une concentration d'un deuxième gaz (152) dans un milieu (150), lequel entoure le capteur (110), sur la base d'une modification du signal de mesure (122), qui est provoquée par une modification d'au moins un élément parmi une intensité, un spectre, un décalage de phase et une durée de décroissance de la lumière luminescente (115) reçue en fonction de la modification de la concentration du deuxième gaz (152) dans le milieu (150),
dans lequel la modification de la concentration du deuxième gaz (152) dans le milieu (150) est provoquée par un écoulement du premier gaz (144) provenant de la fuite de gaz (142) dans le milieu (150),
dans lequel l'exploration est un parcours et/ou un balayage.

2. Procédé selon la revendication 1, **caractérisé en ce que** le milieu (150) est de l'air, le deuxième gaz (152) est un constituant de l'air et la modification de la concentration du deuxième gaz (152) est provoquée par un refoulement du deuxième gaz (152), lequel est provoqué par un écoulement du premier gaz (144) du fait de la fuite de gaz (142), dans lequel en particulier le deuxième gaz (152) est de l'oxygène.

3. Procédé selon l'une quelconque des revendications précédentes, **caractérisé en ce que** l'exploration présente :
le déplacement du capteur (110) par rapport à la surface (140) à une vitesse dans une plage de 0,01 m/s à (x/0,01 m/s), en particulier dans une plage de 0,02 m/s à (x/0,05) m/s, dans lequel la couche de détection dans le sens de mouvement est d'une longueur de x mètres, dans lequel x est au moins 0,001.

4. Procédé selon l'une quelconque des revendications précédentes, présentant en outre :
l'émission d'un signal d'avertissement, au cas où la modification du signal de mesure (122) dépasserait une valeur seuil prédéfinie.

5. Dispositif (100) pour explorer une surface et détecter une fuite de gaz (142) dans la surface (140), qui délimite au moins en partie un volume avec un premier gaz (144), en particulier au moyen d'un procédé selon l'une quelconque des revendications 1 à 5, le dispositif (100) présentant :
un capteur (110) pour détecter une modification d'une concentration d'un deuxième gaz (152) dans un milieu (150), lequel entoure le capteur (110),
**caractérisé en ce que** le capteur (110) est en particulier un capteur opto-chimique et présente ce qui suit :
une source de lumière (112), qui est configurée pour fournir une lumière d'excitation (113),
une couche de détection (114), qui est configurée et disposée pour émettre une lumière luminescente (115) en réponse à la lumière d'excitation (113), et
un récepteur de lumière (116), qui est configuré et disposé pour recevoir la lumière luminescente (115) émise par la couche de détection (114) et la convertir en un signal de mesure (122) ; et
un système d'évaluation (120) pour recevoir et traiter le signal de mesure (122), dans lequel le système d'évaluation (120) est configuré pour détecter la modification de la concentration du deuxième gaz (152) dans le milieu (150), lequel entoure le capteur (110), sur la base d'une modification du signal de mesure (122), qui est provoquée par une modification d'au moins un élément parmi une intensité, un spectre, un décalage de phase et une durée de décroissance de la lumière luminescente (115) reçue en fonction de la modification de la concentration du deuxième gaz (152) dans le milieu (150) ;
dans lequel la modification de la concentration du deuxième gaz (152) dans le milieu (150) est provoquée par un écoulement du premier gaz (144) provenant de la fuite de gaz (142) dans le milieu (150) ;
dans lequel l'exploration est un parcours et/ou un balayage.

6. Dispositif (100) selon la revendication 5, présentant au moins une des caractéristiques suivantes :
la couche de détection (114) est une couche de détection filée à partir de nanofibres, **caractérisé en ce que** les nanofibres sont dotées d'un colorant luminescent ;
le capteur (110) présente un temps de réponse t90 inférieur à 1 s, en particulier inférieur à 500 ms, en particulier inférieur à 50 ms ;
le capteur (110) présente un volume inférieur à 1 cm³.

7. Dispositif (100) selon l'une quelconque des revendications 5 ou 6, le dispositif (110) présentant en outre :
un système de retenue allongé (260), **caractérisé en ce que** le capteur (110) est monté à une première extrémité du système de retenue allongé (260).

8. Dispositif (100) selon la revendication 7, **caractérisé en ce que** le système de retenue allongé (260) présente à une deuxième extrémité opposée au capteur (110) une poignée (262), dans laquelle sont disposés les composants conducteurs du dispositif (100).

9. Dispositif (100) selon la revendication 8, **caractérisé en ce que** les composants conducteurs du dispositif (100) sont disposés exclusivement dans la poignée (262).

10. Dispositif (110) selon l'une quelconque des revendications 5 à 9, présentant en outre au moins un autre capteur (310),
**caractérisé en ce que** l'autre capteur (310) est en particulier un capteur opto-chimique et présente ce qui suit :
une autre source de lumière, qui est configurée pour fournir une autre lumière d'excitation,
une autre couche de détection, qui est configurée et disposée pour émettre une autre lumière luminescente en réponse à l'autre lumière d'excitation, et
un autre récepteur de lumière, qui est configuré et disposé pour recevoir l'autre lumière luminescente émise par l'autre couche de détection et la convertir en un autre signal de mesure ;
dans lequel le capteur (110) et l'autre capteur (310) sont disposés dans l'espace de telle sorte que, sur la base des signaux de mesure respectifs, une position relative de la fuite de gaz (142) dans la surface (140) par rapport à une position actuelle du dispositif (100) peut être déterminée.

11. Dispositif (100) selon l'une quelconque des revendications 5 à 10, présentant en outre
un dispositif de déplacement, lequel présente un composant fixe (380) et un composant mobile (370), **caractérisé en ce que** le capteur (110) et/ou l'autre capteur (310) sont montés sur le composant mobile (370).

12. Dispositif (100) selon la revendication 11, **caractérisé en ce que** le système d'évaluation (120) est configuré pour déterminer, sur la base du signal de mesure (122) et de l'autre signal de mesure, une position relative de la fuite de gaz (142) dans la surface (140) par rapport à une position actuelle du composant mobile (370) du système de déplacement.

13. Dispositif (100) selon l'une quelconque des revendications 10 à 12, **caractérisé en ce que**
le capteur (110) et l'autre capteur (310) sont disposés le long d'une ligne fermée (491), laquelle renferme une forme bidimensionnelle, qui présente un axe de symétrie (390), et
les capteurs (110, 310) sont mobiles le long de l'axe de symétrie (390).

14. Dispositif (100) selon la revendication 13, présentant au moins une des caractéristiques suivantes :
la ligne fermée (491) est un cercle ;
un écart entre des capteurs (110, 310) voisins se situe dans la plage comprise entre 0 cm et 5 cm, en particulier dans la plage comprise entre 1 cm et 3 cm.

15. Dispositif (100) selon l'une quelconque des revendications 11 à 14, présentant en outre
un système de commande (330), lequel est configuré pour mettre en œuvre un procédé selon l'une quelconque des revendications 1 à 5, en particulier une exploration de la surface (140) par le composant mobile (370) du système de déplacement.
